# EUROPÄISCHE PATENTSCHRIFT

(11) **EP 2 103 425 B1**
(45) Veröffentlichungstag und Bekanntmachung des Hinweises auf die Patenterteilung: **29.09.2010**
(21) Anmeldenummer: 09154124.3
(22) Anmeldetag: 02.03.2009
(51) Int. Cl.: B32B 7/06, C09J 7/02, B32B 27/18, G09F 3/10, C09D 107/00, C09J 107/00

(54) **Verwendung von schwefelhaltigen oder phosphorhaltigen Alterungsschutzmitteln in einer naturkautschukbasierenden Klebemasse**
Use of sulphurous or phosphorous anti-aging agents in a natural rubber-based adhesive mass
Utilisation de moyens de protection contre le vieillissement contenant du soufre ou du phosphore dans une masse de colle à base de caoutchouc naturel

(30) Priorität: 17.03.2008 DE 102008014392
(43) Veröffentlichungstag der Anmeldung: 23.09.2009
(73) Patentinhaber: TESA SE, 20253 Hamburg (DE)
(72) Erfinder: Jauer, Dr. Stephan, 37075, Göttingen (DE)

(56) Entgegenhaltungen:
- WO-A-2005/111166
- DE-A1- 19 826 103
- GB-A- 1 211 244
- US-A- 2 615 059
- US-A- 5 667 858

## Beschreibung

Die Erfindung betrifft die Verwendung von schwefelhaltigen oder phosphorhaltigen Alterungsschutzmitteln in einer naturkautschukbasierenden Klebemasse.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln auf ein Abdeckmaterial aufgebracht, das zusammen mit dem Klebeband aufgewickelt wird. Dem Fachmann sind derartige Abdeckmaterialien unter den Namen Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Abhäsive Beschichtungsmassen werden in großem Umfang zur Herstellung von Linern in der Beschichtung insbesondere von flächigen Materialien wie Papiere oder Folien verwendet, um die Adhäsionsneigung von adhärierenden Produkten gegenüber diesen Oberflächen zu verringern.

Wird ein doppelseitig klebendes, mit einem Liner ausgerüstetes Klebeband abgerollt, wird es normalerweise mit der offenen, also linerfreien Klebemassenseite auf einen Untergrund aufgeklebt. Die andere Klebemassenseite haftet währenddessen auf der beschichteten Oberfläche des Liners noch im genügenden Maße, um die Handhabung des Klebebands zu ermöglichen.

Allerdings muss der Liner vom Klebeband abziehbar sein. Durch den Liner selbst oder durch das Abziehen des Liners darf die Klebkraft der Klebemasse nicht für die spätere Verwendung wesentlich beeinträchtigt werden.

Gleichzeitig ist die Stabilität der Beschichtung auf dem Liner, also die Abhäsivität, über lange Zeiträume wichtig, um die Funktion dieser Beschichtung sowie die Eigenschaften der mit dem Liner eingedeckten Klebemasse zu gewährleisten.

Als Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Siloxanen. Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der EP 0 378 420 A1 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte Kohlenwasserstoffreste direkt an den Siliciumatomen gebunden aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte Kohlenwasserstoffreste direkt an den Siliciumatomen gebunden aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Von den genannten Silikonen haben die additionsvernetzenden Silikone die größte ökonomische Bedeutung. Eine ungewünschte Eigenschaft dieser Systeme ist allerdings, ihre Empfindlichkeit gegenüber Katalysatorgiften wie zum Beispiel Schwermetall-, Schwefel- und Stickstoffverbindungen ("Chemische Technik, Prozesse und Produkte" von R. Dittmeyer et al., Band 5, 5. Auflage, Wiley-VCH, Weinheim, Deutschland, 2005). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet.

Das Niveau der Abzugskraft einer Haftklebmasse von einem Silikonreleaseliner wird üblicherweise durch Silikon-MQ-Harze (Silikon-Methylsilikon-Kautschuk-Harze) eingestellt. Je nach Anforderung an das Produkt wird ein unterschiedliches Niveau für die Abzugskräfte verlangt. Dies macht es erforderlich, mehrere Releaseliner mit verschiedenen MQ-Harz-Gehalten zu verwenden und damit auch zu bevorraten. Aufgabe der Erfindung ist, verschiedene Abzugskräfte, die sich zwischen einer naturkautschukbasierenden Klebemasse, die sich auf einem mit einer Silikonbeschichtung ausgerüsteten Liner befindet, und diesem Liner einstellen, ohne dass die Klebkraft der naturkautschukbasierenden Klebemasse beeinflusst wird.

Gelöst wird diese Aufgabe durch die Verwendung von schwefelhaltigen oder phosphorhaltigen Alterungsschutzmitteln, wie sie im Hauptanspruch beschrieben wird. Die Unteransprüche betreffen vorteilhafte Fortbildungen des Erfindungsgegenstands.

Demgemäß betrifft die Erfindung die Verwendung von schwefelhaltigen oder phosphorhaltigen Alterungsschutzmitteln in einer naturkautschukbasierenden Klebemasse, die sich auf einem mit einer Silikonbeschichtung ausgerüsteten Liner befindet, zur Einstellung der Abzugskräfte, mit denen der Liner von der Klebemasse abgezogen werden kann.

Die schwefelhaltigen oder phosphorhaltigen Alterungsschutzmittel wirken als PlatinKatalysator-Gifte. Die Präsenz von Katalysatorgiften führt dazu, dass eine platinkatalysierte Vernetzungsreaktion zwischen den Kohlenstoff-KohlenstoffDoppelbindungen des Naturkautschuks und den im Releaseliner befindlichen Si-H-Gruppen des Silikon-Vernetzers teilweise oder vollständig verhindert wird. Mit anderen Worten, durch die Alterungsschutzmittel lassen sich die Reaktionen an der Grenzfläche Silikon/Klebmasse beeinflussen. Je höher der Anteil der schwefelhaltigen Alterungsschutzmittel, desto mehr wird die Reaktion zwischen Klebmasse und der Silikonbeschichtung behindert mit der Folge, dass die Abzugskräfte des Liners von der kautschukbasierenden Klebemasse abnehmen.

Erfindungsgemäß wird unter einer naturkautschukbasierenden Klebemasse eine Klebemasse verstanden, die zu mindestens 50 Gew.-% (ohne Berücksichtigung von Additiven oder sonstigen Zuschlagstoffen) aus Naturkautschuk besteht.

Neben Naturkautschuk können in der Klebemasse Synthesekautschuke Verwendung finden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können dem Naturkautschuk zur Verbesserung der Verarbeitbarkeit thermoplastische Elastomere mit einem Gewichtsanteil von 10 bis 50 Gew.-% zugesetzt werden, und zwar bezogen auf den Gesamtnaturkautschukanteil. Stellvertretend genannt seien an dieser Stelle vor allem die besonders verträglichen Styrol-Isopren-Styrol- (SIS) und Styrol-Butadien-Styrol (SBS) -Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas sei ausdrücklich hingewiesen.

Kohlenwasserstoffharze lassen sich nach ihrer Provenienz in drei große Gruppen einteilen: Petroleum-, Kohlenteer- und Terpenharze. Die wichtigsten Kohlenteerharze sind die Cumaron-Inden-Harze.

Zu den Kohlenwasserstoffharze werden auch durch Polymerisation von Monomeren wie Styrol beziehungsweise durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm³.

Als Weichmacher in der Klebemasse können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Der Liner ist erfindungsgemäß mit einer Silikonbeschichtung ausgerüstet. Vorzugsweise handelt es bei der auf dem Liner vorgesehene Silikonbeschichtung um ein additionsvernetzendes Silikon.

Im Folgenden werden besonders vorteilhafte Silikone näher erläutert.

Thermisch härtende Trennbeschichtungen auf Basis von additionsvernetzenden Silikonen sind häufig Mehrkomponentensysteme, welche typischerweise aus folgenden Komponenten bestehen:
a) Einem linearen oder verzweigten Polydimethylsiloxan, welches aus ca. 80 bis 200 Dimethylsiloxan-Einheiten besteht und an den Kettenenden mit Vinyldimethylsiloxy-Einheiten abgestoppt ist, oder einem linearen Polydimethylsiloxan, welches aus ca. 80 bis 200 Dimethylsiloxan-Einheiten und ca. 1 bis 10 Methylvinylsiloxan-Einheiten besteht sowie an den Kettenenden mit Vinyldimethylsiloxy-Einheiten abgestoppt ist. Typische Vertreter sind zum Beispiel lösungsmittelfreie, additionsvernetzende Silikonöle, wie DEHESIVE® 920, 912 oder 610, alle kommerziell erhältlich bei Wacker-Chemie GmbH.
b) Einem linearen oder verzweigten Vernetzer, welcher üblicherweise aus Methylhydrogensiloxy- und Dimethylsiloxy-Einheiten beziehungsweise nur aus Methylhydrogensiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind.
c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH.
d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH kommerziell erhältlich ist.

Des Weiteren sind Massen geeignet, wie sie zum Beispiel in der bereits oben erwähnten EP 0 378 420 A1 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Diese Silikone werden auf dem Liner aufgebracht und bilden somit eine geschlossene Silikonbeschichtung.

Als Trägermaterial des Liners können Papiere oder Folien eingesetzt werden.

Als Folien werden dabei Polyolefinfolien (Polypropylen- und Polyethylenfolien) oder Polyesterfolien eingesetzt.

Als schwefelhaltige Alterungsschutzmittel können schwefelhaltige Antioxidantien wie CAS Nr. 583-39-1, 53988-10-6, 110553-27-0, 693-36-7, 123-28-4, 16545-54-3, oder 29598-76-3 eingesetzt werden.

Beispiele sind Thioether wie 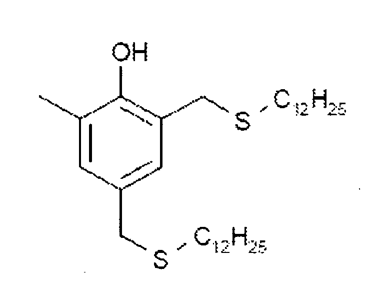 und Mercaptane wie:

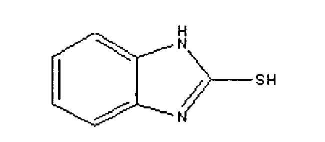

Bevorzugt handelt es sich bei den schwefelhaltigen Alterungsschutzmitteln um Mercaptane und Thioether wie 2-Mercapto-Benzimidazol, 2-Mercapto-4(5)-methylbenzimidazol oder 2,4-Bis(dodecylthiomethyl)-6-methylphenol.

Bei den phosphorhaltigen Alterungsschutzmitteln sind Phosphite und Phosphine bevorzugt, insbesondere solche aus der Produktfamilie Irgafos® der Firma Ciba.

Vorzugsweise sind die Alterungsschutzmittel in der Klebemasse in einer Menge von 0,01 bis 10 Gew.-%, vorzugsweise von 0,5 bis 5 Gew.-% enthalten.

Im Folgenden wird die Erfindung anhand von Beispielen näher erläutert, ohne dass diese in irgendeiner Form einschränkend wirken sollen.

### Beispiele

### Allgemeine Vorgehensweise

Eine vernetzbare Silikonmasse bestehend aus 50 Teilen Wacker DEHESIVE® 920, 50 Teilen Wacker CRA® 42, 9,4 Teilen Wacker Vernetzer V90 und einem Teil Katalysator OL wurde auf Glassinepapier (Silco BS, 78 g/m², Cartiera di Carmignano S.p.A., Carmignano di Brenta, Italien) mit Hilfe eines Single Roll Lab Coater (Eucild Coating Systems, Inc., Bay City, MI, USA) aufgetragen. Das Silikon wurde bei 120 °C für 30 Sekunden vernetzt. Der Silikonauftrag wurde auf 1,5 g/m² eingestellt.

Eine Haftklebmasse mit der unter dem jeweiligen Beispiel angegebenen Zusammensetzung wurde auf dem oben beschriebenen Trennpapier mit Hilfe eines Streichbalkens aufgetragen. Es wurde ein Masseauftrag von 50 g/m² gewählt. Die Klebmasse wurde nach dem Abdampfen des größten Teils des Lösungsmittels für 10 Minuten bei 100 °C in einem Umluftofen getrocknet. Nach dem Abkühlen der Proben wurde eine 23 µm dicke PET-Folie auf die Klebmasse kaschiert und der Verbund in 2 cm breite Streifen geschnitten.

Die Abzugskraft der PET-Folie und Klebmasse vom Trennpapier wurde in einem Winkel von 180° bei einer Abzugsgeschwindigkeit von 0,3 m/min gemessen, wobei die Messung bei 23±1 °C und einer relativen Luftfeuchte von 50±5 % durchgeführt wurde. Die Messung der Abzugskraft wurde ca. 24 Stunden nach Beschichtung des Trennpapiers mit der Klebmasse sowie nach ca. dreiwöchiger Lagerung der Muster bei 40 °C gemessen.

Die Klebkraft der Haftklebmasse wurde auf Stahlplatten gemessen, wobei der Verbund aus PET-Folie und Klebmasse in einem Winkel von 180° bei einer Abzugsgeschwindigkeit von 0,3 m/min abgezogen wurde. Die Messung wurde bei 23±1 °C und einer relativen Luftfeuchte von 50±5 % durchgeführt.

### Beispiel 1

Die in diesem Beispiel verwendete Haftklebmasse bestand aus 50 Teilen Naturkautschuk, 26 Teilen eines aliphatischen Kohlenwasserstoff-Harzes, 20 Teilen eines Kolophoniumester-Harzes, drei Teilen Polyisobutylen, einem Teil des Alterungsschutzmittels Vulkanox® BKF (2,2'-Methylen-bis-(4-methyl-6-*tert*-Butyl-phenol) sowie 2 Teile des Alterungsschutzmittels 2-Mercapto-Benzimidazol (Vulkanox® MB/MG, Lanxess).

### Beispiel 2

Die in diesem Beispiel verwendete Haftklebmasse bestand aus 50 Teilen Naturkautschuk, 26 Teilen eines aliphatischen Kohlenwasserstoff-Harzes, 20 Teilen eines Kolophoniumester-Harzes, drei Teilen Polyisobutylen, einem Teil des Alterungsschutzmittels Vulkanox® BKF (2,2'-Methylen-bis-(4-methyl-6-*tert*-Butyl-phenol) sowie 2 Teile des Alterungsschutzmittels 2-Mercapto-4(5)-methyl-benzimidazol (Vulkanox® MB2/MG-C, Lanxess).

### Beispiel 3

Die in diesem Beispiel verwendete Haftklebmasse bestand aus 50 Teilen Naturkautschuk, 26 Teilen eines aliphatischen Kohlenwasserstoff-Harzes, 20 Teilen eines Kolophoniumester-Harzes, drei Teilen Polyisobutylen, einem Teil des Alterungsschutzmittels Vulkanox® BKF (2,2'-Methylen-bis-(4-methyl-6-*tert*-Butyl-phenol) sowie 2 Teile des Alterungsschutzmittels 2,4-Bis(dodecylthiomethyl)-6-methylphenol (IRGANOX® 1726, Ciba).

### Vergleichsbeispiel

Die in diesem Beispiel verwendete Haftklebmasse bestand aus 50 Teilen Naturkautschuk, 26 Teilen eines aliphatischen Kohlenwasserstoff-Harzes, 20 Teilen eines Kolophoniumester-Harzes, drei Teilen Polyisobutylen und einem Teil des Alterungsschutzmittels Vulkanox® BKF (2,2'-Methylen-bis-(4-methyl-6-*tert*-Butyl-phenol).

**Tabelle: Ergebnisse**

| **Experiment** | **Abzugskraft frisch [cN/cm]** | **Abzugskraft nach Lagerung [cN/cm]** | **Klebkraft Stahl [N/cm]** |
|---|---|---|---|
| Beispiel 1 | 6 | 14 | 3,2 |
| Beispiel 2 | 10 | 18 | 3,0 |
| Beispiel 3 | 18 | 29 | 3,2 |
| Vergleichsbeispiel | 25 | 48 | 3,1 |

Aus der Tabelle ist zu entnehmen, dass alle Klebmassen innerhalb des Messfehlers identische Klebkräfte aufweisen. Im Gegensatz dazu variieren die Abzugskräfte vom Releaseliner erheblich, sowohl die Abzugskräfte frisch, als auch nach Lagerung.

Die Abzugskräfte des Vergleichsbeispiels ohne jegliches Platingift sind am höchsten. Durch Zugabe der schwefelhaltigen Alterungsschutzmittel können die Abzugskräfte deutlich reduziert werden. 2-Mercapto-Benzimidazol (Beispiel 1) zeigt im Vergleich zu den anderen beiden Alterungsschutzmitteln die stärkste inhibierende Wirkung. Selbst nach ca. dreiwöchiger Lagerung bei 40 °C ist die Abzugskraft in Beispiel 1 noch kleiner als die Abzugskraft des Vergleichsbeispiels frisch.

## Patentansprüche

1. Verwendung von schwefelhaltigen oder phosphorhaltigen Alterungsschutzmitteln in einer naturkautschukbasierenden Klebemasse, die sich auf einem mit einer Silikonbeschichtung ausgerüsteten Liner befindet, zur Einstellung der Abzugskräfte, mit denen der Liner von der Klebemasse abgezogen werden kann.

2. Verwendung nach Anspruch 1,
**dadurch gekennzeichnet dass**
es sich bei den schwefelhaltigen Alterungsschutzmitteln um Mercaptane und Thioether wie 2-Mercapto-Benzimidazol, 2-Mercapto-4(5)-methyl-benzimidazol oder 2,4-Bis(dodecylthiomethyl)-6-methylphenol und bei den phosphorhaltigen Alterungsschutzmitteln um Phosphite und Phosphine handelt.

3. Verwendung nach Anspruch 1 oder 2,
**dadurch gekennzeichnet, dass**
der Anteil der Alterungsschutzmittel in der naturkautschukbasierenden Klebemasse bei 0,01 bis 10 Gew.-%, vorzugsweise bei 0,5 bis 5 Gew.-% liegt.

4. Verwendung nach zumindest einem der Ansprüche 1 bis 3,
**dadurch gekennzeichnet, dass**
es sich bei der Silikonbeschichtung auf dem Liner um ein additionsvernetzendes Silikon handelt.

## Claims

1. Use of sulphur-containing or phosphorus-containing ageing inhibitors in an adhesive which is based on natural rubber and is located on a liner provided with a silicone coating, for adjusting the removal forces with which the liner can be removed from the adhesive.

2. Use according to Claim 1, **characterized in that** the sulphur-containing ageing inhibitors are mercaptans and thioethers such as 2-mercaptobenzimidazole, 2-mercapto-4(5)-methylbenzimidazole or 2,4-bis(dodecyl-thiomethyl)-6-methylphenol and the phosphorus-containing ageing inhibitors are phosphites and phosphines.

3. Use according to Claim 1 or 2, **characterized in that** the fraction of the ageing inhibitors in the adhesive based on natural rubber is 0.01% to 10% by weight, preferably 0.5% to 5% by weight.

4. Use according to at least one of Claims 1 to 3, **characterized in that** the silicone coating on the liner is an addition-crosslinking silicone.

## Revendications

1. Utilisation d'agents antivieillissement soufrés ou phosphorés dans une matière adhésive à base de caoutchouc naturel, qui se trouve sur un film de séparation (liner) muni d'un revêtement silicone, pour le réglage des forces de tirage avec lesquelles le liner peut être séparé par tirage de la matière adhésive.

2. Utilisation selon la revendication 1, **caractérisée en ce que** les agents antivieillissement soufrés consistent en mercaptans et thioéthers tels que le 2-mercapto-benzimidazole, le 2-mercapto-4(5)-méthyl-benzimidazole ou le 2,4-bis(dodécylthiométhyl)-6-méthylphénol et les agents antivieillissement phosphorés consistent en phosphites et phosphines.

3. Utilisation selon la revendication 1 ou 2, **caractérisée en ce que** la proportion des agents antivieillissement dans la matière adhésive à base de caoutchouc naturel vaut de 0,01 à 10 % en poids, de préférence de 0,5 à 5 % en poids.

4. Utilisation selon au moins l'une des revendications 1 à 3, **caractérisée en ce que** le revêtement silicone sur le liner consiste en un silicone réticulable par addition.
